# EUROPEAN PATENT SPECIFICATION

(11) **EP 1 221 776 B1**
(45) Date of publication and mention of the grant of the patent: **15.09.2004**
(21) Application number: 01400009.5
(22) Date of filing: 04.01.2001
(51) Int. Cl.: H04B 10/18

(54) **Optical fiber transmission system with enhanced total launchable optical power**
Faseroptisches Übertragungssystem mit verbesserter gesamter Eingangsleistung
Système de transmission à fibre optique avec puissance d'entrée totale ameliorée

(43) Date of publication of application: 10.07.2002
(73) Proprietor: ALCATEL, 75008 Paris (FR)
(72) Inventor: Labrunie, Laurent, 75002 Paris (FR); Blondel, Jean-Pierre, 78530 Buc (FR); Boubal, François, 75013 Paris (FR); Buet, Laurence, 75014 Paris (FR); Brandon, Eric, 92340 Bourg la Reine (FR); Havard, Vincent, 94600 Choisy le Roi (FR); Le Roux, Patrice, 91310 Montlhery (FR)
(74) Representative: Lamoureux, Bernard

(56) References cited:
- EP-A- 0 863 630
- EP-A- 0 936 761
- EP-A- 1 030 473
- US-A- 6 031 659

## Description

Especially in telecommunication optical fiber transmission systems are used to transport optical signals over long distances. In order to increase the amount of information to be transmitted via such a system, the optical signal being launched into the fiber by a transmitter terminal is composed of a number of bit-patterns at different wavelength channels within a total bandwidth of wavelengths. The total launchable bandwidth is limited by the characterizing features of the fiber. Thus, it is a common aim to space the individual wavelength channels as little from each other as possible. 64 channels at a channel separation of 0.8 nm covering a total bandwidth of 52 nm are typical values.

The optical powers guided by the fiber can be quite high. This is of special interest if long distances across large marine sections have to be bridged. Because of obvious reasons of maintainance submarine repeater stations should be avoided or at least their number should be minimized. This means, that the signal power launched into the fiber has to be maximized to guarantee the receipt of a signal large enough to be reliably detected by the receiver terminal at the far end of the fiber line. However, the maximum total power of the optical signal cannot be increased up to any degree without degrading the signal quality. There are several effects like line broadening, non-linear impairment and channel cross talk, that worsen the signal quality. On the other hand, especially, when the different wavelength channels are very close together, a good signal quality is essential for a reliable de-multiplexing in the receiver terminal.

The critical figure, which determines the maximum launchable total power is the so called optical power budget. The power budget is defined as the difference between the average optical power per wavelength channel launched into the fiber and the worst sensitivity of the wavelength channels involved. Both, the average power and the sensitivity usually are expressed in dBm. The sensitivity of a wavelength channel is defined as the minimum optical power, that has to be launched into this channel to generate a reliably detectable signal at the input of the receiver. Thus, the optical power budget, usually expressed in dB, can be interpreted as the usable surplus of optical power over the losses due to any kind of signal degradation.

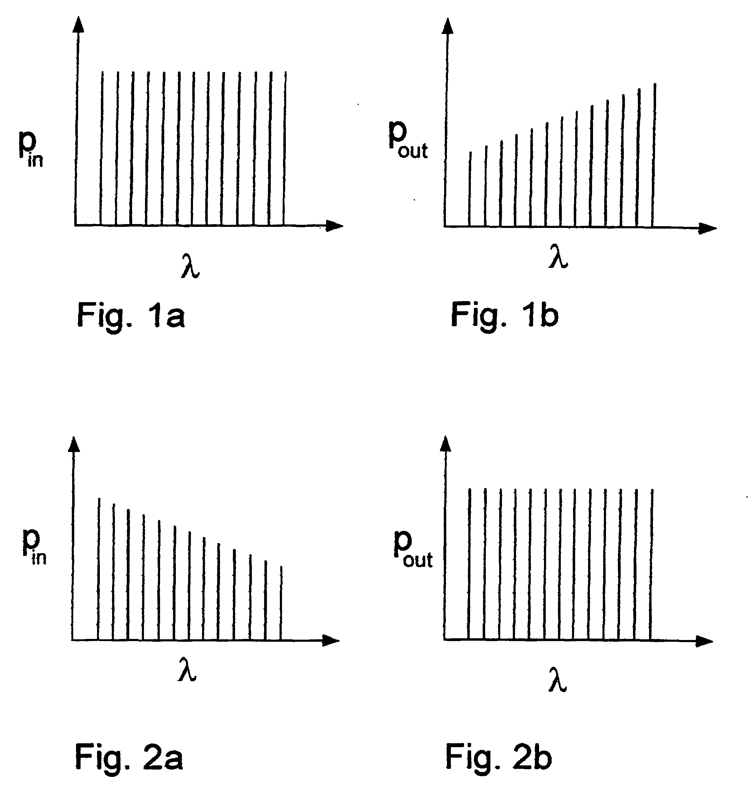

One of the main degradation effects in signals of high optical power is the depletion of the short wavelength channels in favor of the longer wavelength channels, known as the "stimulated Raman effect", an inelastic stray process. The stimulated Raman effect is explained quantum-mechanically by the virtual excitation of a molecule of the fiber by an incomming photon of a given energy. A second photon of lower energy, i.e. of a longer wavelength, stimulates the deexcitation of the virtual state, i.e. the emission of a photon. The emitted photon has got the same characteristics, namely the same wavelength and the same direction as the stimulating second photon. Thus, the shorter wavelength channels are depleted in favor of the longer wavelength channels by the stimulated Raman effect. Because of this effect, a tilt in the distribution of wavelength channels can be observed. The tilt increases with the distance, the optical signal has passed through the fiber. Fig. 1b schematically shows the distortion of a signal consisting of several wavelength channel of equally distributed signal power, as shown in fig. 1a, where pᵢₙ is the power launched per channel, pₒᵤₜ is the power per channel reaching the receiver and λ is the wavelength. As a partial remedy, it is known to launch a distorted signal, according to fig. 2a, into the fiber. This yields a flat distribution of power at the far end of the fiber line. However, this way of compensation has severe disadvantages.

The importance of the stimulated Raman effect is, on the one hand, a function of the short wavelength channels's optical power. On the other hand it is depending on the number and strength of the possible deexcitation paths, i.e. the number and power of the longer wavelength channels. If the optical powers are equally distributed amongst the channels, the resulting tilt can mathematically be expressed as the product of the total optical power launched into the fiber times the total bandwidth of wavelengths. This means, the higher the optical power launched to the fiber, the higher is the degradation of the short wavelength channels, i.e. the worse the quality of the signal. It also means, that it is the shortest wavelength channel, whose sensitivity is worst in the system. The optical power budget is, thus, defined relative to this channel. However, if for reasons of compensation, a distorted signal is launched, i.e. the short wavelength channels are overemphasized, the non-linear impairment between the channels becomes stronger.

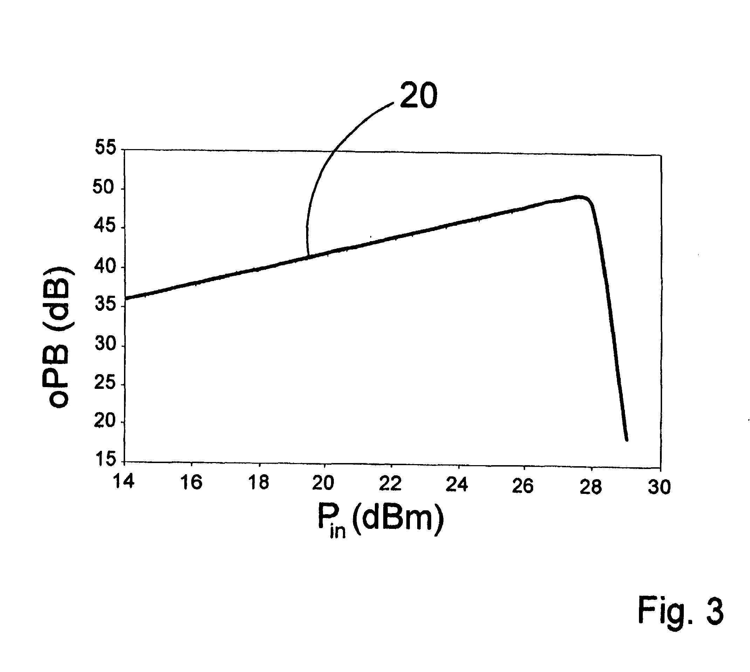

In the regime of relatively low total optical powers the optical power budget is governed by linear stray processes. An increase of the optical power launched into the fiber yields an almost linear increase of the optical power budget. This linear behaviour can be read from the left part of the graph 20 in fig. 3. Fig. 3 shows the experimentally determined optical power budget (oPB) as a function of the total power (Pᵢₙ) launched into the fiber. The data shown were taken in a system of 64 wavelength channels covering a total bandwidth of 52 nm. At a total optical power of about 27.5 dBm the power budget shows a sharp kink and starts to decrease rapidly from its maximum value of about 49 dB. This kink can be explained by the non-linear effect of stimulated Raman emission, which takes over the government of the power budget at high optical powers. The figure clearly shows the limits of power increase as a means of signal enhancement. The term "maximum total optical power" will be used for the total optical power associated with the maximum optical power budget.

It is a specific object of the invention to provide an optical fiber transmission system, which allows, compared to known systems, eg. document EP 0 863 630, the input of higher optical powers while simultanously increasing the optical power budget.

To this end the total optical bandwidth to be launched into the fiber line is divided in at least two wavelength domains before launching. Each wavelength domain consists of a multitude of individual wavelength channels. The domains do not overlap. Each one is fed into an individual, dedicated optical fiber, while the optical power budget is optimized for each of the fibers individually. After a certain distance, which is long enough to cause a decrease of the total power below a certain threshold, the signals of the individual fiber branches are multiplexed into one unique fiber guiding the multiplexed signal to the receiver terminal. The threshold mentioned is defined by the maximum total optical power launchable into the unique fiber. This threshold must not be exceeded by the sum of the total optical powers multiplexed together plus multiplexer losses.

As explained before, the extent of the tilt is depending on the product of the total optical power times the bandwidth covered by this power. If now the total bandwidth is split into several domains and each domain is launched into a dedicated fiber, the bandwidth per fiber - the first factor of the product in question - is reduced. Keeping constant the total power per fiber - the second factor of the product in question - means a respective increase of the average optical power per channel. This increase leads, according to the definition, to a direct increase of the optical power budget. On the other hand, the tilt is still reduced compared to a one-fiber-system. This fact allows a less severe compensation, i.e. the distortion of the power distribution launched into the fiber doesn't have to be as strong as in a one-fiber-system. This means especially, that the optical power of the short wavelength channels can be reduced, which yields a reduction of the non-linear impairment and an improvement of the shortest channel's sensitivity.

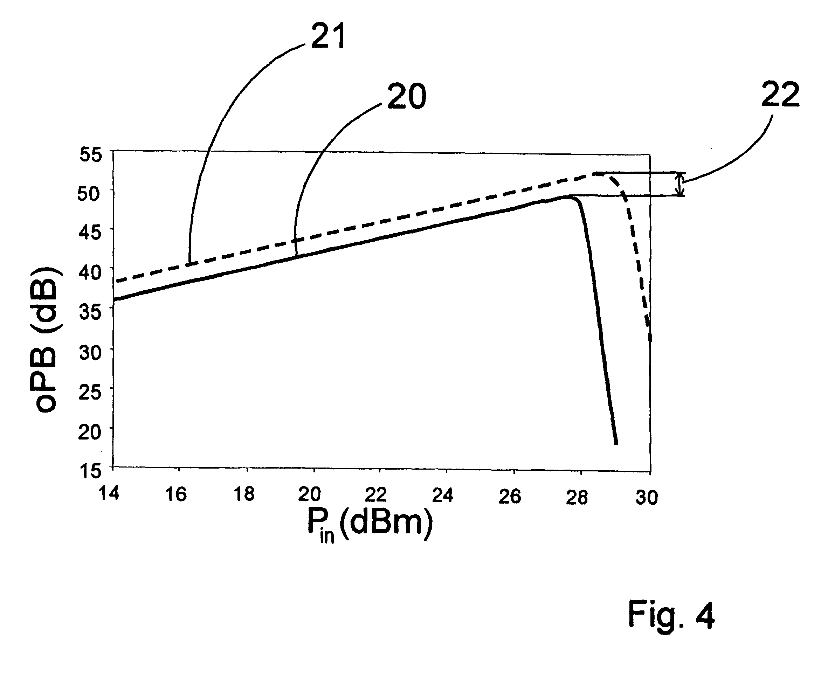

If the different wavelength domains are multiplexed into one unique fiber not earlier than the sum of the total powers of all the branches has decreased below the maximum total power launchable into the unique fiber, the profit of the increased power budget can be preserved. The improvement can easily be seen from fig. 4. Fig. 4 shows the optical power budget (oPB) as a function of the total optical power (Pᵢₙ) comparing a conventionally configured system (solid line 20) to a system configured according to the invention (dashed line 21).

It is preferred to split the total bandwidth only into two separate domains being launched into two dedicated fiber branches. For telecommunication most conveniently the two domains of the so called C-band (typically 1529 - 1562 nm) and the so called L-band (typically 1569 - 1604 nm) are used. The dashed line 21 in fig. 4 represents such a system, where both, the C- and the L-band contain 32 channels each. The system represented by the solid line 20 is the same as in fig. 3 explained further above. Splitting the total bandwidth, while keeping constant the average power per channel would decrease both factors of the tilt-product by a factor of two (half the total bandwidth and half the total optical power would be launched into each branch). However, it is preferred to rather keep constant the total power per fiber. This means, the average power per channel can be increased by a factor of two. This is equivalent to an increase of 3 dB, which directly yields the same increase of the optical power budget, as can be read from fig. 4. Taking into account the additional profit of lower non-linear impairment due to a smaller tilt-compensation by overemphasizing the short wavelenght channels and also taking into account the inevitable losses of the multiplexing procedure - about 0.8 dB in the example given -, a total profit 22 of about 3.2 dB increase of the optical power budget is achieved.

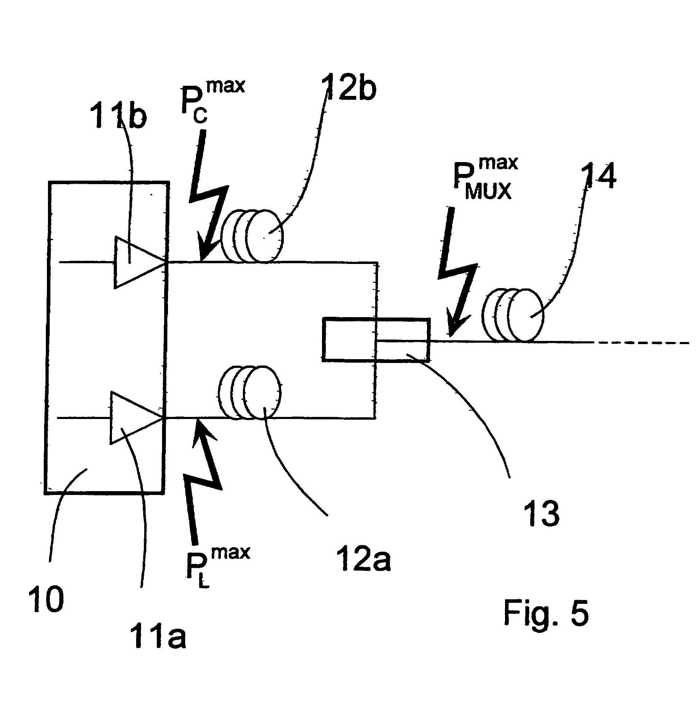

Fig. 5 schematically shows the setup of a preferred embodiment of the transmission system according to the invention. A transmitter terminal 10 is provided with two optical fiber amplifiers 11a and 11b amplifying the input signal of the L-band and of the C-band respectively. These two wavelength domains are launched into two different, dedicated fiber branches 12a and 12b respectively. It is preferred to optimize the optical input power for each branch individually. That means, the maximum launchable optical power, yielding a maximum optical power budget, is fed into each of the fiber branches 12a, 12b, as indicated by the flash-like arrows P_{L}^{max} and P_{C}^{max}. Most advantageously the dedicated fiber branches 12a, 12b are embedded in terrestrial fiber cables, preferably in only one terrestrial fiber cable. After having passed a certain distance through the fiber branches 12a, 12b, the two wavelength domains are multiplexed together by means of a multiplexer station 13. This station 13 must not be closer to the transmitter station 10 than the optical powers of the signals in the two fiber branches 12a, 12b have decreased in a way, that their sum does not exceed the maximum optical power P_{MUX}^{max} launchable into the unique fiber 14, taking into account the multiplexer losses. In fact, there is a certain loss of optical power due to the multiplexing mechanism. Thus, the sum of powers of the C- and the L-band may exceed P_{MUX}^{max} by this amount. Preferably the multiplexer station 13 is situated close to the beach line of a marine section to be bridged by the fiber line. The unique fiber 14 is preferably embedded in a submarine fiber cable.

It is obvious, that a physical transmission network can involve several systems according to the invention in parallel. The parallel branches can all be embedded in one cable. In this case the multiplexer station 13 would multiplex the wavelenth domains of each pair of branches into one of several, parallel unique fibers beeing embedded in a single cable. It is also possible to split the total bandwidth of wavelengths into more than two domains.

## Claims

1. Optical fiber transmission system, comprising a fiber line, and a transmitter terminal (10) for launching an optical signal into the fiber line, said fiber line guiding said optical signal to a receiver terminal, said optical signal being composed of a multitude of bit-patterns at different wavelength channels within a given total bandwidth of wavelengths,
**characterized in that** :
- the fiber line consists, in its first section, of at least two branches (12a, 12b),
- said transmitter (10) for launching into each one of said branches (12a, 12b) a separate part of said optical signal being composed of a sub-multitude of said bit-patterns at neighbouring wavelength channels within non-overlapping bandwidth domains,
- said parts of said optical signal being multiplexed together into one unique fiber (14) by means of a multiplexer station (13) the length of the branches being such that the power of the signal inputted into the unique fiber (14) is below the maximum total optical power launchable into said unique fiber (14).

2. Transmission system according to claim 1, **characterized in that** the full bandwidth of wavelength is split into two domains.

3. Transmission system according to claim 2, **characterized in that** the the C-band of approximately 1529 - 1562 nm and the L-band of approximately 1569 - 1604 nm are used as bandwidth domains launched into dedicated fiber branches (12a, 12b).

4. Transmission system according to one of the preceding claims, **characterized in that** the two fiber branches (12a, 12b) are embedded in the same terrestrial fiber cable.

5. Transmission system according to one of the preceding claims, **characterized in that** the unique fiber (14) is embedded in a submarine fiber cable.

6. Transmission system according to one of the preceding claims, **characterized in that** the multiplexer station (13) is situated close to a beach line.

7. Transmission system according to one of the preceding claims, **characterized in that** several of such transmission systems are used in parallel to constitute a transmission network.

8. Transmission system according to claim 7, **characterized in that** the corresponding fibers of the parallel systems are embedded in the same fiber cable.

## Patentansprüche

1. Faseroptisches Übertragungssystem, das aus einer Faserstrecke und einem Sender-Endgerät (10) zur Eingabe eines optischen Signals in die Faserstrecke besteht, wobei die Faserstrecke das optische Signal zu einem Empfänger-Endgerät leitet, und wobei das optische Signal aus einer Vielzahl von Bitmustern in unterschiedlichen Wellenlängen-Kanälen innerhalb einer gegebenen Gesamt-Bandbreite von Wellenlängen zusammengesetzt ist,
**dadurch gekennzeichnet, dass**:
- die Faserstrecke in ihrem ersten Abschnitt aus mindestens zwei Zweigen (12a, 12b) besteht,
- der Sender (10) in jeden der Zweige (12a, 12b) einen getrennten Teil des optischen Signals einspeisenfähigwird, das aus einer Unter-Vielzahl der Bitmuster in benachbarten Wellenlängen-Kanälen innerhalb nicht überlappender Bandbreitenbereiche besteht,
- die Teile des optischen Signals mittels einer Multiplexer-Station (13) auf eine einzige Faser (14) gemultiplext werden, wobei die Länge der Zweige so ist, dass die Leistung des in die eine Faser (14) eingegebenen Signals unter dem Maximum der optischen Gesamtleistung liegt, die in die einzige Faser (14) eingespeist werden kann.

2. Übertragungssystem gemäß Anspruch 1, **dadurch gekennzeichnet, dass** die volle Bandbreite von Wellenlängen in zwei Bereiche aufgeteilt wird.

3. Übertragungssystem gemäß Anspruch 2, **dadurch gekennzeichnet, dass** das C-Band von ungefähr 1529 - 1562 nm und das L-Band von ungefähr 1569 - 1604 nm als Bandbreiten-Bereiche benutzt werden, die in die speziellen Faser-Zweige (12a, 12b) eingespeist werden.

4. Übertragungssystem gemäß einem der obigen Ansprüche, **dadurch gekennzeichnet, dass** die beiden Faser-Zweige (12a, 12b) in dasselbe terrestrische Faser-Kabel eingebettet sind.

5. Übertragungssystem gemäß einem der obigen Ansprüche, **dadurch gekennzeichnet, dass** die eine Faser (14) in ein Untersee-Faser-Kabel eingebettet ist.

6. Übertragungssystem gemäß einem der obigen Ansprüche, **dadurch gekennzeichnet, dass** die Multiplexer-Station (13) sich in der Nähe des Strandes befindet.

7. Übertragungssystem gemäß einem der obigen Ansprüche, **dadurch gekennzeichnet, dass** mehrere dieser Übertragungssysteme parallel verwendet werden, um ein Übertragungsnetz zu bilden.

8. Übertragungssystem gemäß Anspruch 7, **dadurch gekennzeichnet, dass** die entsprechenden Fasern der parallelen Systeme in dasselbe Faser-Kabel eingebettet sind.

## Revendications

1. Système de transmission à fibre optique comprenant une ligne à fibre et un terminal émetteur (10) pour introduire un signal optique dans la ligne à fibre, ladite ligne à fibre guidant ledit signal optique vers un terminal récepteur, ledit signal optique étant composé d'une multitude de motifs binaires à des canaux de longueur d'onde différents dans une bande passante totale donnée de longueurs d'onde,
**caractérisé en ce que** :
- la ligne à fibre se compose, dans sa première section, d'au moins deux branches (12a, 12b),
- ledit émetteur (10) étant destiné à introduire dans chacune desdites branches (12a, 12b) une partie séparée dudit signal optique composée d'une sous-multitude desdits motifs binaires sur des canaux de longueur d'onde voisins dans des domaines de bande passante non chevauchants,
- lesdites parties dudit signal optique étant multiplexées ensemble dans une fibre unique (14) au moyen d'une station de multiplexeur (13), la longueur des branches étant telle que la puissance du signal introduit dans la fibre unique (14) est inférieure à la puissance optique totale maximum qui peut être introduite dans ladite fibre unique (14).

2. Système de transmission selon la revendication 1, **caractérisé en ce que** toute la bande passante totale de longueur d'onde est divisée en deux domaines.

3. Système de transmission selon la revendication 2, **caractérisé en ce que** la bande C d'approximativement 1529 à 1562 nm et la bande L d'approximativement 1569 à 1604 nm sont utilisées comme domaines de bande passante introduits dans des branches à fibre dédiées (12a, 12b).

4. Système de transmission selon l'une des revendications précédentes, **caractérisé en ce que** les deux branches à fibre (12a, 12b) sont incorporées dans le même câble à fibre terrestre.

5. Système de transmission selon l'une des revendications précédentes, **caractérisé en ce que** la fibre unique (14) est incorporée dans un câble à fibre sous-marin.

6. Système de transmission selon l'une des revendications précédentes, **caractérisé en ce que** la station de multiplexeur (13) est située près d'une ligne côtière.

7. Système de transmission selon l'une des revendications précédentes, **caractérisé en ce que** plusieurs de tels systèmes de transmission sont utilisés en parallèle pour constituer un réseau de transmission.

8. Système de transmission selon la revendication 7, **caractérisé en ce que** les fibres correspondantes des systèmes parallèles sont incorporées dans le même câble à fibre.
